# EUROPEAN PATENT APPLICATION

(11) **EP 4 763 378 A1**
(43) Date of publication of application: **24.06.2026**
(21) Application number: 24383389.4
(22) Date of filing: 17.12.2024
(51) Int. Cl.: B22F 7/08, B05B 7/22, B05B 13/02, B22F 10/25, B22F 12/37, B22F 12/47, B22F 12/70, B22F 12/84, B23K 26/08, B23K 26/144, B23K 26/34, B33Y 10/00, B33Y 30/00, C23C 24/08, F16D 65/12, B23K 26/16, B23K 26/12

(54) **MACHINE AND METHOD FOR COATING A BRAKE DISC WORKPIECE**

(71) Applicant: Etxe-Tar, S.A., 20870 Elgoibar (Guipúzcoa) (ES)
(72) Inventor: GABILONDO, Jose Juan, 20870 Elgoibar (Guipúzcoa) (ES)
(74) Representative: Balder IP Law, S.L.

(57) **Abstract**

A machine for coating brake disc workpieces (W) comprises a laser cladding station (C) for applying a coating onto a brake disc workpiece (W) supported on a workpiece support (1001, 1002, 1003, 1004). The laser cladding station (C) comprises an ejector (2) of coating material, a laser head (1) for projecting a laser beam (11) for heating coating material (21), and an enclosure for defining an enclosed space (4) for housing the workpiece (W). The laser head (1) and the ejector (2) of coating material are at last partially arranged within the enclosed space (4). The machine also comprises a subsystem (75) for ventilation arranged for withdrawing air and excess coating material from the enclosed space (4) via at least one air outlet (7) for letting air and excess coating material out of the enclosed space (4).

## Description

### TECHNICAL FIELD

The present invention relates to a machine for applying at least one layer of coating to a brake disc workpiece, using laser cladding.

### STATE OF THE ART

Disc brakes are brakes that comprise one or more calipers arranged to squeeze one or more pairs of brake pads against a rotor to create friction and thereby slow down rotation of the rotor. The rotor is typically disc-shaped, generally with a central opening in which a rotary shaft can be accommodated. This rotor typically comprises one or more discs, typically with a central opening. These discs are typically referred to as brake discs and will be referred to as such herein.

Brake discs are typically made of a metallic material, typically a ferrous material, such as some kind of steel. For example, brake discs may be made of gray cast iron (FG 15) with high carbon content and good thermophysical characteristics.

One problem involved with traditional brake discs is that the interaction between the brake pads and the brake disc during braking operations cause wear on the brake disc, which results in the removal of matter in particulate form (dust) from the brake discs. These particles are nowadays considered to represent a substantial part of the non-exhaust emissions produced by vehicles, in particular by automotive vehicles such as cars and trucks. Thus, it has been found desirable to reduce the emission of particles from the brake discs during use. One way of achieving this is by providing the brake discs with an appropriate coating, at least on the surface areas intended to interact with the brake pads.

It is known in the art to apply one or more coating layers (for example, a fist layer to improve adherence, and a second layer of a material suitable for contact with one or more brake pads to provide friction braking with minimized dust emission) to a surface of a brake disc workpiece using laser cladding, whereby powder is applied to the surface in question using laser heating. Basically, powder is supplied towards the surface to be coated, and a laser beam is used to heat the powder before, when and/or after it reaches the surface, at least to a temperature high enough to melt the powder, which subsequently solidifies and forms (or forms part of) the coating layer in question. Measures may need to be taken to prevent powder particles that do not end up forming part of the coating layer (that is, what will be referred to as "excess coating material" or "excess coating particles" herein) from contaminating the surrounding machinery or the persons present at the site where the process is taking place. Thus, it may be necessary to carry out the laser cladding in a carefully enclosed environment, basically, in a hermetically enclosed (or substantially hermetically enclosed) environment.

### DESCRIPTION OF THE INVENTION

Basically, brake disc workpieces -for example, disc or annularly shaped workpieces made out of some kind of ferrous material, such as some kind of steel, for example, gray cast iron- can be placed in some kind of enclosure where a coating material in particular form, typically in the form of a powder, can be supplied and heated by a laser device, so as to provide melting of the coating material and adherence thereof to the relevant surface (which can be part of the surface of a side of the brake disc workpiece, or the entire surface of the side), without any coating material exiting from the enclosure in an uncontrolled manner.

One problem involved with these methods relates to the control of the coating material, generally referred to as "powder" herein. Another problem may be related to the heating produced by the laser beam during the coating process.

A first aspect of the invention relates to a machine for coating brake disc workpieces, the machine comprising a laser cladding station for applying a coating onto a brake disc workpiece supported on a workpiece support, the laser cladding station comprising:
an ejector of coating material (that is, at least one ejector; in some embodiments, the ejector may comprise one or more nozzles for ejecting coating material in powder form) for ejecting coating material towards a surface of the workpiece;
a laser head (that is, at least one laser head; in some embodiments, there may be several laser heads) for projecting a laser beam for heating coating material so that it adheres to a surface of the workpiece to form part of a coating layer on the surface;
an enclosure for defining an enclosed space for housing the workpiece; and
drive means for rotating the workpiece within the enclosed space.

The laser head and the ejector of coating material are at last partially arranged within the enclosed space, and are radially displaceable in relation to the workpiece so as to allow for deposition of a coating on a surface area of the workpiece by operating the laser head and the ejector and displacing them radially in relation to the workpiece, while rotating the workpiece, so as to progressively build up a coating layer on the surface area of the workpiece.

The machine further comprises a subsystem for ventilation arranged for withdrawing air and excess coating material from the enclosed space via at least one air outlet for letting air and excess coating material out of the enclosed space.

The term "excess coating material" refers to the coating material that has not adhered to the workpiece so as to form part of the applied coating. The term "subsystem for ventilation" refers to any device, apparatus or system capable of withdrawing air and excess coating material from the enclosed space, by creation of an air flow out of the enclosed space, such as by contributing to or by producing a relative under-pressure at the air outlet(s) that contributes to the evacuation of air and excess coating material from the enclosed space via the respective air outlet. The "subsystem for ventilation" typically includes means for generating a suitable pressure or "under-pressure" level for extracting air from the enclosed space, and may include some kind of filter arrangement for filtering out excess coating material from the withdrawn air. The subsystem for ventilation is typically connected to one or more air outlets, typically arranged at a bottom portion of the enclosed space, via one or more conduits.

It can be advantageous to use an enclosed space of relatively small dimensions, not only in order to provide for a compact machine layout but also, for example, in order to facilitate cleaning and, in particular, evacuation of the excess coating material during operation of the machine.

Now, a potential problem that may be involved with laser cladding processes is that not all of the laser beam power is used for producing the coating by heating the coating material. Typically, part of the laser beam may be reflected off the surface of the workpiece. For example, when the laser head is arranged to project the laser beam towards the surface at an angle, the reflected laser beam may be projected onto the inner wall of the enclosed space, or onto one or more components arranged within the enclosed space. As laser beams with relatively high beam power (for example, in the multi-kW range, such as between 10kW and 20kW, such as between 16kW and 20KW) are typically used in this kind of applications, the reflected laser beam may end up causing damage to the enclosure, such as to walls of the enclosed space, and/or to components arranged therein. Also, the reflected laser beam may cause undesired heating of the laser cladding station or part thereof.

The inventors have discovered that surprisingly, the excess coating material can itself act as a heat sink, that is, absorb part of the reflected laser light and thus reduce the above-mentioned inconveniences.

In some embodiments of the invention, the laser cladding station is arranged so that the laser head projects a laser beam onto the surface of the workpiece, whereby the laser beam is reflected off the surface of the workpiece, the laser cladding station being arranged to promote movement of excess coating material through the reflected laser beam, to absorb part of the energy of the reflected laser beam. Thus, the risk of damage to the machine due to the reflected laser beam is minimized, and laser induced heat can be partly evacuated from the enclosed space by evacuating heated excess coating material particles from the enclosed space, via the air outlet.

In some embodiments of the invention, the machine comprises at least one air inlet for letting air into said enclosed space, wherein the at least one air inlet and the at least one air outlet are arranged so as to promote movement of excess coating material through the reflected laser beam. That is, the air inlet(s) and the air outlet(s) can be arranged to promote the flow of excess coating material through the part of the enclosed space that is traversed by the reflected laser beam, thereby enhancing laser beam energy absorption by excess coating material particles, which are thereafter evacuated from the enclosed space via the air outlet(s).

In some embodiments of the invention, a shield, such as a shield plate, is arranged within the enclosed space so as to receive laser light reflected off the workpiece. Thus, the energy of the reflected laser beam that is not absorbed by excess coating material particles can be absorbed by the shield, rather than by the walls of the enclosure or by other elements within the enclosure, which may be more sensitive to thermal wear and/or more expensive to replace than the shield. The shield may serve to reduce the risk of damage to components present in the enclosed space, such as one or more measuring devices, etc. Also, the shield may (be arranged to) contribute to the promotion of the flow of excess coating material through the reflected laser beam, as discussed above, by contributing to delimiting the flow path for the excess coating material.

Now, loading and unloading of the workpiece may take some time, and this may imply a sub-optimal use of the machinery involved, such as the machinery that is used for the laser cladding as such, including the laser equipment and the equipment for supplying the coating material towards the workpiece.

In some embodiments of the invention, the machine comprises:
- a plurality of work stations, each workstation being arranged for carrying out at least one operation in relation to a brake disc workpiece;
- a rotary platform provided with a plurality of workpiece supports, the workpiece supports being distributed around the rotary platform so that, by rotation of the rotary platform around a platform axis, such as a vertical axis, the workpiece supports can be shifted from one of the work stations to another one of the work stations, to allow workpieces arranged in the workpiece supports to be sequentially operated upon in the work stations;
- each workpiece support being configured for supporting a workpiece so that the workpiece can be rotated around a respective workpiece axis in the workpiece support.

One of the work stations is a loading station for loading a workpiece onto a respective workpiece support. In some embodiments, the loading station can also be an unloading station for unloading of a processed workpiece from the respective workpiece support, that is, loading and unloading then take place in the same station; in other embodiments, the unloading station for unloading of the processed workpieces can be different from the loading station, whereby these two stations can be situated one after the other in the circumferential direction of the machine, so that the loading station is the first station and the unloading station is the last station according to the track followed by the workpiece when the platform is rotated during operation.

Another one of the work stations is the laser cladding station. The laser cladding station comprises a cover arranged to interact with the corresponding workpiece support, that is, with the one of the plurality of workpiece supports that at a given moment is positioned in the laser cladding station, to form the enclosed space housing the workpiece, at least part of the ejector of coating material, and at least part of the laser head, so as to prevent coating material, typically in particulate form such as in powder form, from exiting the enclosed space in an uncontrolled manner.

By using a rotary platform that can simultaneously support a plurality of workpieces and sequentially transfer them through a series of work stations, the loading and unloading operations can be carried out (in a combined loading and unloading station, or in two different stations, one for loading and one for unloading) while the laser cladding is taking place in the laser cladding station. Thus, efficient use can be made of the laser cladding equipment, and the rotary platform has been found to represent a practical means for rapid shifting of the workpieces from one station to another. This layout can serve to limit the cycle time of the machine to be close to the cycle time of, for example, the laser cladding station.

The use of a cover arranged to interact with the workpiece support that is present in the laser cladding station, for example, with part of the workpiece support itself, with part of the platform supporting the workpiece support, or with any other part related to and moving with the platform and with the workpiece support, for example, some kind of enclosure fully or partially surrounding the workpiece support, so as to create an enclosed space, makes it possible to prevent coating material, such as coating powder, from accessing many parts of the machine and, in particular, from entering into contact with human beings such as operators who may be present in the machine or in the area around the machine, such is in the corresponding part of a factory where the machine is installed. It also allows for a minimization of the enclosed space, compared to solutions in which the entire machine is enclosed in order to prevent coating material in particulate form from being inhaled by operators.

The term "cover" should be interpreted broadly as encompassing any means that serve to form, together with other parts of the machine, an enclosed space involving the workpiece support and, optionally, part of the rotary platform at the location of the workpiece support. In particular, the term "cover" should not be interpreted as implying that the workpiece support is necessarily covered by the cover from above.

In some embodiments, one of the work stations of the machine can be a work station for carrying out measurements on the workpiece, for cleaning the workpiece, and/or for pre-heating the workpiece, prior to arrival of the workpiece at the laser cladding station. In these and/or in other embodiments, one of the work stations of the machine can be a work station for carrying out measurements on the workpiece, for cleaning the workpiece by removing excess coating material therefrom, and/or for cooling the workpiece, after receiving the workpiece from the laser cladding station.

In some embodiments of the invention, the machine further comprises, in the laser cladding station, at least one sealing member for creating a seal between the cover and the workpiece support and/or the rotary platform, including any parts, such as some kind of enclosure fully or partially housing the workpiece support, attached to the platform and/or to the workpiece support, at the location of the workpiece support, so as to seal the enclosed space so as to prevent undesired exit of coating material from the enclosed space. For example, the at least one sealing member may comprise one or more seal members connected to or forming part of the cover, and/or one or more seal members connected to the platform and/or to the workpiece support, and arranged so that some kind of circumferential seal is established between the cover and the platform and/or workpiece support, thereby ensuring that the enclosed space can be sealed when the respective workpiece support is positioned in the laser cladding station. For example, the one or more sealing members may be of a flexible and/or elastic material. For example, two flexible and/or elastic sealing members may be arranged so as to contact each other to form a seal that seals the enclosed space.

In some embodiments of the invention, the at least one sealing member comprises at least one inflatable member. It has been found that providing some kind of inflatable seal member, such as a circumferential inflatable member arranged on the cover and/or on the rotary platform and/or on the workpiece support, may involve several advantages. For example, friction between seal members and/or between one seal member and a mating surface during rotation of the platform can be avoided or minimized, and it may not be necessary to arrange for a relative movement between the cover and the platform and/or workpiece support for establishing the seal. For example, the platform can be rotated to bring the relevant workpiece support to its operative position in relation to the cover, for example, to position it under the cover if the cover is placed above the platform, whereafter an effective seal can be established by inflating the inflatable member, for example, pneumatically or hydraulically. This can be helpful in order to allow for efficient sealing without arranging for movement of the cover towards the platform.

In some embodiments of the invention, the machine is arranged for inflating the inflatable member prior to initiating a laser cladding operation in the laser cladding station, and to deflate the inflatable member after conclusion of the laser cladding operation.

In some embodiments of the invention, the drive means comprise a drive motor arranged outside the enclosed space and arranged to interact, for example, via some kind of gear mechanism, with the workpiece support arriving at the laser cladding station upon rotation of the rotary platform, so as to cause rotation of the respective workpiece. This kind of drive means arrangement can also be present in one or more of the other work stations. Whereas in some embodiments the drive means comprise a motor, such as an electrical motor, that rotates with the rotary platform, for example, in a manner such that the motor will be present within the enclosed space, or otherwise, in other embodiments the drive means comprise a motor, such as an electrical motor, that pertains to the respective work station, such as to the laser cladding station, in a fixed manner, that is, the motor that does not rotate with the rotary platform. Thus, the motor is arranged to interact with the workpiece support that arrives at the work station, for example, via some kind of gear arrangement, for example, including gear wheels that engage with each other when the respective workpiece support arrives at the respective work station. This may imply certain advantages, for example, a cost reduction -for example, not all work stations may require rotation of the workpiece, such that in some embodiments, the number of motors may be less than the number of work stations-, separation of the motor from the enclosed space in a manner that reduces the risk of contamination of the motor by the coating material, reduced need for means to protect the motor from contamination, easier access to the motor for maintenance thereof, simpler and/or more reliable energy supply to the motor, etc. Also, even in the case that each work station requires a motor for rotation of the workpiece, the motor can be adapted -for example, in terms of power/speed/torque- to the requirements of the specific work station, thereby further contributing to efficiency, reliability and cost-effectiveness.

In some embodiments of the invention, the machine comprises a plurality of work stations, each workstation being arranged for carrying out at least one operation in relation to a brake disc workpiece, each work station comprising a workpiece support for supporting a workpiece, the machine being arranged for shifting workpieces from one of the work stations to another one of the work stations, to allow workpieces to be sequentially operated upon in the work stations; one or more of the workpiece supports may be configured for supporting a workpiece so that the workpiece can be rotated around a respective workpiece axis in the workpiece support, for example, during laser cladding, cleaning, etc. The means for shifting can comprise any kind of suitable transfer mechanism, for example, a rotary transfer arrangement. Suitable transfer arrangements are well known in the art and there is thus no need to further discuss them here.

One of the work stations is a loading station for loading a workpiece into the machine. In some embodiments, the loading station can also be an unloading station for unloading of a processed workpiece from the machine, that is, loading and unloading then take place in the same station; in other embodiments, the unloading station for unloading of the processed workpieces can be different from the loading station, whereby these two stations can be situated one after the other in the circumferential direction of the machine, or at different ends of a linear machine, just to give some examples, so that the loading station is the first station and the unloading station is the last station according to the track followed by the workpiece through the work stations of the machine.

Another one of the work stations is the laser cladding station. The laser cladding station comprises a cover arranged to interact with a complementary structure, for example, with the workpiece support, or with a container portion housing the workpiece support, to form the enclosed space housing the workpiece, at least part of the ejector of coating material, and at least part of the laser head, so as to prevent coating material, typically in particulate form such as in powder form, from exiting the enclosed space in an uncontrolled manner.

The use of a cover arranged to interact with the complementary structure, for example, with the workpiece support itself, or with some kind of enclosure fully or partially surrounding the workpiece support, so as to create an enclosed space, makes it possible to prevent coating material, such as coating powder, from accessing many parts of the machine and, in particular, from entering into contact with human beings such as operators who may be present in the machine or in the area around the machine, such is in the corresponding part of a factory where the machine is installed. It also allows for a minimization of the enclosed space, compared to solutions in which the entire machine is enclosed in order to prevent coating material in particulate form from being inhaled by operators. Thus, the cover can be used to seal off the enclosed space once the workpiece has arrived at the workpiece support.

The term "cover" should be interpreted broadly as encompassing any means that serve to form, together with other parts of the machine, an enclosed space involving the workpiece support. In particular, the term "cover" should not be interpreted as implying that the workpiece support is necessarily covered by the cover from above.

In some embodiments, one of the work stations of the machine can be a work station for carrying out measurements on the workpiece, for cleaning the workpiece, and/or for pre-heating the workpiece, prior to arrival of the workpiece at the laser cladding station. In these and/or in other embodiments, one of the work stations of the machine can be a work station for carrying out measurements on the workpiece, for cleaning the workpiece by removing excess coating material therefrom, and/or for cooling the workpiece, after receiving the workpiece from the laser cladding station.

In some embodiments of the invention, the machine further comprises, in the laser cladding station, at least one sealing member for creating a seal between the cover and the complementary structure, such as a container portion, so as to seal the enclosed space so as to prevent undesired exit of coating material from the enclosed space. For example, the at least one sealing member may comprise one or more seal members connected to or forming part of the cover, and/or one or more seal members connected to the complementary structure, and arranged so that some kind of circumferential seal is established between the cover and the complementary structure, thereby ensuring that the enclosed space can be sealed when the respective workpiece has been positioned in the laser cladding station. For example, the one or more sealing members may be of a flexible and/or elastic material. For example, two flexible and/or elastic sealing members may be arranged so as to contact each other to form a seal that seals the enclosed space.

In some embodiments of the invention, the at least one sealing member comprises at least one inflatable member. It has been found that providing some kind of inflatable seal member, such as a circumferential inflatable member arranged on the cover and/or on the complementary structure, may involve several advantages. A reliable sealing can be established without need to move seal members and/or one seal member and a mating surface in relation to each other while they are in friction contact with each other.

In some embodiments of the invention, the machine is arranged for inflating the inflatable member prior to initiating a laser cladding operation in the laser cladding station, and to deflate the inflatable member after conclusion of the laser cladding operation.

In some embodiments of the invention, the drive means comprise a drive motor arranged outside the enclosed space and arranged to interact, for example, via some kind of gear mechanism, with the workpiece support, so as to cause rotation of the respective workpiece. This kind of drive means arrangement can also be present in one or more of the other work stations. The arrangement of the drive motor outside the enclosed space may reduce the risk of contamination of the motor by the coating material, reduce need for means to protect the motor from contamination, easier access to the motor for maintenance thereof, simpler and/or more reliable energy supply to the motor, etc.

In some embodiments of the invention, the laser cladding station is provided with means for creating an air flow through the enclosed space, for removal of excess coating material, that is, of coating material that has not ended up forming part of the coating towards the subsystem for ventilation. Thereby, the risk of contamination of the surrounding machinery and/or of human operators is reduced. This means may include, for example, one or more air injectors and/or one or more air extractors, associated, for example, with the cover and/or with the workpiece support.

In some embodiments of the invention, the laser head and/or the ejector of coating material are arranged to be controllably displaceable in a radial direction with regard to the workpiece axis during laser cladding, so that a laser beam produced by the laser head and/or a stream of coating material ejected by the ejector of coating material, respectively, can be controllably displaced in relation to the surface of the workpiece to be coated during a laser cladding operation at the laser cladding station. Thus, in some embodiments, the laser beam and the stream of coating material can be displaced radially in relation to the workpiece axis, that is, radially inwards and/or outwards, during a laser cladding operation, while, at the same time, the workpiece can rotate around the workpiece axis, whereby a selected area of the workpiece surface can become coated with the coating layer.

In some embodiments of the invention, the laser head and/or the ejector of coating material is/are arranged in a flexible portion, such as in a flexible hood portion, of the cover, thereby allowing the laser head and/or the ejector of coating material to be displaced in relation to the workpiece during laser cladding. Thus, due to the flexibility of the portion, such as a portion of a flexible material such as an elastic material, and/or a bellow-shaped portion, the laser head and/or the ejector of coating material can be displaced in relation to the rest of the cover, for example, in a radial direction in relation to the workpiece axis, without displacing other parts of the cover, such as the part or parts of the cover associated with the sealing member(s), and/or without displacing the sealing member(s), such as an inflatable sealing member.

In some embodiments of the invention, the laser head and/or the ejector of coating material is/are arranged in a second portion of the cover that is displaceable in relation to a first portion of the cover, thereby allowing the laser head and/or the ejector of coating material to be displaced in relation to the workpiece during laser cladding. Thus, due to the capacity of displacement of the second portion in relation to the first portion, for example, in a direction that extends substantially radially in relation to the workpiece axis, the laser head and/or the ejector of coating material can be displaced in relation to the first portion of the cover, for example, in a radial direction in relation to the workpiece axis, without displacing the first portion of the cover, which in some embodiments is a portion associated with the sealing member(s), and/or without displacing the sealing member(s), such as an inflatable sealing member.

An arrangement for manipulating the laser head, in particular, to displace it and/or to modify its orientation in space, can be provided, preferably completely outside the enclosed space, to reduce the risk of this arrangement becoming contaminated by excess coating material. The laser head can extend into the enclosed space through the flexible portion or hood portion, or through the second portion described above, for example, through an opening therein, with an air-tight fit so as to keep the enclosed space hermetically closed (except for the air inlets and outlets discussed above).

In some embodiments of the invention, the enclosed space (4) has a volume of less than 0.5 m³., preferably less than 0.4 m³, even more preferably less than 0.3 m³. The volume is the "free volume", that is, the volume that can serve to house a gas, that is, the volume that is not occupied by components such as laser head, drive means, etc. The workpiece is not taken into account when referring to this volume. If part of the enclosure delimiting the enclosed space is flexible, the indicated volume refers to the maximum volume, with the flexible part in an expanded state.

In some embodiments of the invention, the air outlet is connected to the subsystem for ventilation via a first conduit, and the subsystem for ventilation is connected to another station of the machine via a second conduit. The first conduit and the second conduit are interconnected upstream of the subsystem for ventilation in order to mix an air stream carrying excess coating material arriving via the first conduit, and an air stream arriving via the second conduit, prior to these air streams arriving at the subsystem for ventilation. Thereby, the hot air stream carrying hot excess coating material directed towards the subsystem for ventilation from the cladding station can be cooled to a certain extent by the air arriving from the other station, such as a station for loading and unloading, prior to arriving at the subsystem for ventilation, which often may be sensitive to high temperatures. This may reduce the need for additional cooling means, or at least the need for the capacity of the additional cooling means, thereby providing for efficient use of energy.

In some embodiments of the invention, the laser cladding station comprises an additional outlet arrangement including a coating material receiver, the ejector of coating material being displaceable from a first position above the workpiece for ejecting coating material towards the workpiece, and a second position proximate to the coating material receiver for ejecting coating material into the coating material receiver, for evacuation of coating material via the additional outlet arrangement. Thereby, the flow of coating material out of the ejector of coating material can be maintained also during the period when a change of workpiece takes place in the cladding station, while minimizing the (risk of) contamination of the surroundings of the laser cladding station with coating material: substantial amounts of coating material exiting from the ejector of coating material can be received by the coating material receiver and evacuated, optionally for recycling of coating material. By maintaining the flow of coating material out of the ejector also during the time between subsequent coating operations, that is, also during the time during which the exchange of workpieces take place in the laser cladding station, no time is lost for re-establishing adequate coating material flow conditions before initiation of the coating of a new workpiece arriving at the laser cladding station. This reduces the cycle time at the laser cladding station, which typically equals or is similar to the cycle time of the entire machine.

Another aspect of the invention relates to a method of operating a machine as described above, comprising the steps of:
- loading a brake disc workpiece into the machine;
- positioning the brake disc workpiece in the enclosed space;
- with the brake disc workpiece in the enclosed space, carrying out a laser cladding operation on the workpiece using the laser head and the ejector of coating material, so as to build up a coating layer on the workpiece;
- evacuating excess coating material from the enclosed space;
- unloading the brake disc workpiece from the machine.

In some embodiments of the invention, the method comprises the step of promoting movement of excess coating material towards a reflected laser beam within the enclosed space, in order to at least partially absorb reflected laser beam energy with the excess coating material, prior to evacuating the excess coating material from the enclosed space.

In some embodiments of the invention, promoting the movement of excess coating material towards the reflected laser beam comprises generating air flow within the enclosed space so as to favor movement of excess coating material towards the reflected laser beam.

In some embodiments of the invention, the method comprises the steps of:
- introducing a brake disc workpiece into the laser cladding station;
- after positioning the brake disc workpiece in the enclosed space, moving the ejector of coating material to a first position for initiating the laser cladding operation on the workpiece to produce a coated workpiece;
- after finishing the laser cladding operation on the workpiece, moving the ejector of coating material to a second position, for ejecting coating material into a coating material receiver, for evacuation of coating material via the additional outlet arrangement;
whereby ejection of coating material via the ejector of coating material is not interrupted during removal of the coated brake disc workpiece from the laser cladding station and introduction of a new workpiece into the laser cladding station.

In some embodiments of the invention, carrying out the laser cladding operation comprises directing a laser beam towards a workpiece surface portion extending in an x-y plane, wherein during the laser cladding operation the laser beam is displaced along the surface of the workpiece along the x-axis, wherein the laser beam is oriented so that an orthogonal projection of the laser beam onto an x-z plane forms an angle α with the x-y plane, and so that an orthogonal projection of the laser beam onto an y-z plane forms an angle β with the x-y plane, wherein 75°≤|α|≤89.5°, for example, 80°≤|α|≤88°, for example, 83°≤|α|≤87°, and wherein 75°≤|β|≤89.5°, for example, 80°≤|β|≤89.5°, for example, 87°≤|β|≤89.5°, for example, 88°≤|β|≤89°. Whereas it may be desirable, for example, in terms of efficient use of laser power and/or coating material, to direct the laser beam substantially perpendicularly towards the surface of the workpiece, a certain deviation from the perpendicular orientation may be desired, for example, to prevent the laser head and/or the ejector of coating material from entering into contact with the workpiece -for example, with a center portion of the workpiece that extends upwards from the surface portion to be coated-, and/or to prevent reflected laser light and/or ejected coating material that does not adhere to the workpiece from arriving at the laser head and/or the ejector of coating material and potentially causing damage to these components. Thus, a certain inclination of the laser beam can be desired, both in the plane x-z including the x-axis along which the laser beam moves during the cladding operation, and in the y-z plane perpendicular thereto. The above-mentioned angle value ranges have been found to be preferable, and are not more than 15 degrees from the purely perpendicular orientation of the laser beam and the workpiece surface.

A further aspect of the invention relates to the use of excess coating material in a machine as described above, and/or in a method as described above, in order to reduce heating of the enclosed space and/or damage to walls of the enclosed space and/or to components within the enclosed space.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figure 1 is a schematic top view of a machine according to one possible embodiment of the invention.
Figure 2 is a schematic side cross sectional view of the machine of figure 1.
Figure 3 is a schematic side cross sectional view of a laser cladding station according to an embodiment of the invention.
Figure 4 is a schematic top view of the interior of a laser cladding station according to the embodiment of figure 3.
Figure 5 is a schematic top view of a machine in accordance with an embodiment of the invention.
Figure 6 is a schematic side cross sectional view of the cover of the laser cladding station in accordance with an alternative embodiment of the invention.
Figure 7 is a schematic side cross sectional view of a laser cladding station according to an embodiment similar to the one of figure 3, but with a differently arranged drive means for rotation of the workpiece.
Figure 8 is a schematic illustration of the orientation of the laser beam in relation to the surface of the workpiece, according to an embodiment of the invention.

### DESCRIPTION OF WAYS OF CARRYING OUT THE INVENTION

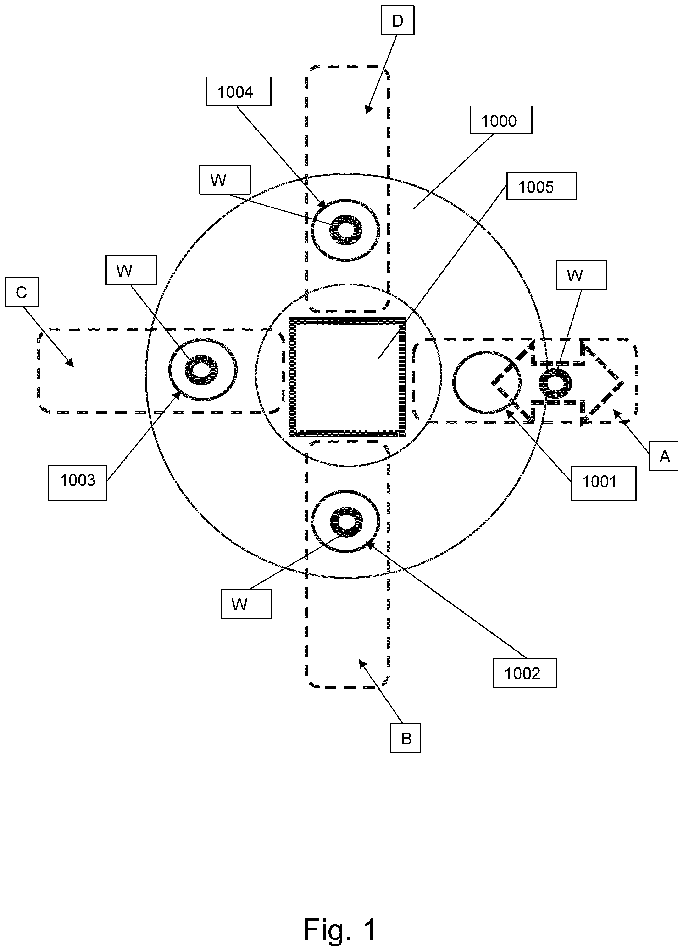

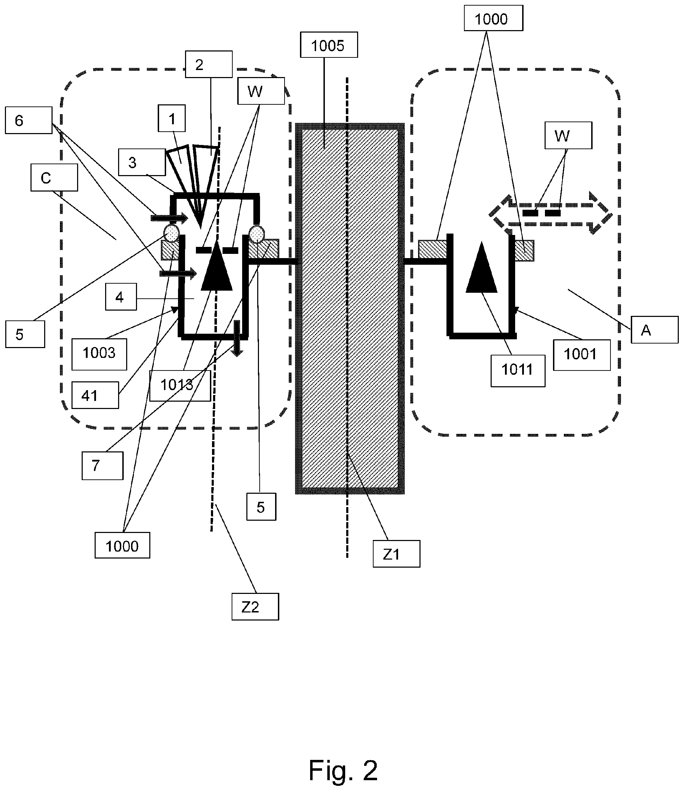

Figure 1 is a schematic top view of a machine comprising a center column 1005 extending along a vertical axis (Z1, see figure 2), and a rotary platform 1000 which supports a plurality of workpiece supports 1001, 1002, 1003, 1004, which are distributed around the rotary platform 1000, in the circumferential direction of the rotary platform 1000, as shown in figure 1. Each workpiece support is arranged for supporting a brake disc workpiece W, and includes drive means (schematically illustrated as 1011 in the case of workpiece support 1001, and as 1013 in the case of workpiece support 1003, see figure 2) for rotating the respective workpiece W. By rotating the rotary platform (when observed as in figure 1, clockwise), a workpiece can be sequentially transported from a first schematically illustrated work station A, via schematically illustrated work stations B, C and D, and back to work station A. These work stations are arranged for carrying out different operations on the workpiece. In this embodiment, the workpieces are transferred from one work station to the next workstation together with the workpiece supports. However, in other embodiments, the workpiece supports may be fixed, that is, each workpiece support may form a fixed part of a respective workstation, and only the workpieces are transferred from work station to work station.

Work station A is a loading station for loading workpieces W into the machine and for unloading workpieces W from the machine, once the workpieces have passed through the other work stations B, C and D. This configuration is advantageous in that the cycle time of the machine can be limited to the cycle time of the work station having the longest cycle time (that is, the time needed to complete the operations on a workpiece W to be carried out in the respective work station), for example, the cycle time of a laser cladding station C (which, for example, may have a cycle time in the order of 30 s), without adding the time for loading and unloading of the workpiece, which, for example, may be in the order of 5 seconds, typically less than the time needed for switching a workpiece from one station to the next station by rotating the rotary platform 1000. Actually, having a separate station for loading and unloading -that is, not carrying out the loading and unloading of workpieces at the laser cladding station-can also be advantageous in that during the time needed for carrying out the laser cladding operation in the laser cladding station, not only loading and unloading but also a partial cleaning of the equipment can take place at the station for loading and unloading.

In the side cross section view of figure 2, the work station A for loading and unloading of workpieces and the laser cladding station C for coating of the workpieces can be observed. The work station A for loading and unloading may include means for manipulating and transferring a workpiece into and out of the corresponding workpiece support (any kind of suitable equipment can be used, and it is merely schematically illustrated as a double arrow in figure 2), whereas the laser cladding station C for coating includes a laser head 1 and an ejector 2 of coating material. In some embodiments, there is only one of each, and in other embodiments, there may be more than one laser head 1 and/or more than one ejector 2 of coating material. In some embodiments, a plurality and laser heads 1 and ejectors 2 of coating material may be provided for simultaneous operation on more than one workpiece in the laser cladding station. The laser head 1 and the ejector of coating material 2 are schematically illustrated as separate devices in figure 2, but they may be incorporated into a single unit, for example, the ejector 2 of coating material may comprise a plurality of nozzles for ejecting coating material mounted, for example, circumferentially, at a front end of the laser head 1, so that the nozzles are moveable together with the laser head, for example, in the radial direction of the workpiece, to progressively build up a layer of coating material on a surface of the workpiece, while the workpiece is kept rotating, as known in the art.

The first work station B downstream of the work station A for loading and unloading may, for example, be a work station for carrying out measurements on the workpiece, for cleaning the workpiece, and/or for pre-heating the workpiece or for cooling the workpiece, prior to arrival of the workpiece at the laser cladding station C. On the other hand, the work station D downstream from the laser cladding station C may be a work station for carrying out measurements on the coated workpiece, for cleaning the workpiece by removing excess coating material therefrom and/or for cooling the workpiece, which may arrive at the work station D at a high temperature, due to the heating typically taking place in the cladding station. Cleaning and/or cooling may involve rotation of the workpiece, such as high-speed rotation of the workpiece.

The workpiece supports 1001, 1002, 1003, 1004 are typically identical or substantially identical. Each workstation includes the respective workpiece support, but the workpiece support associated to a certain work station changes from one cycle to another cycle of operation of the machine. That is, due to the rotation of the rotary platform 1000, at different moments of the process, the laser cladding station C includes different ones of the workpiece supports 1001, 1002, 1003, 1004. For example, figure 2 illustrates a moment when the workpiece support 1003 is in the laser cladding station C. In the embodiment of figure 2, the workpiece support 1003 includes a container portion 41 (basically, an enclosure partially enclosing the part of the workpiece support where the workpiece is supported), which can have any suitable size and configuration and which houses, inter alia, the drive means 1011, 1013 for rotating the workpiece W. In figure 2, it is schematically illustrated how the workpiece W in the cladding station can be arranged to rotate around a vertical axis Z2.

In other embodiments, typically, in embodiments in which the workpiece supports are not arranged on or in a rotary platform or similar, only the workpieces are transferred from one workstation to another, whereby each workstation includes its own workpiece support, with the necessary means for supporting, clamping and/or rotating the respective workpiece. Figure 1 could be understood to illustrate also this kind of embodiment, but with item 1000 being understood to schematically illustrate means for transferring the workpiece from one station to the next station, but with the workpiece supports remaining stationary in their respective work stations. These means can consist in any suitable workpiece transfer means, for example, rotary workpiece transfer means. Different examples of such workpiece transfer means are well known in the art.

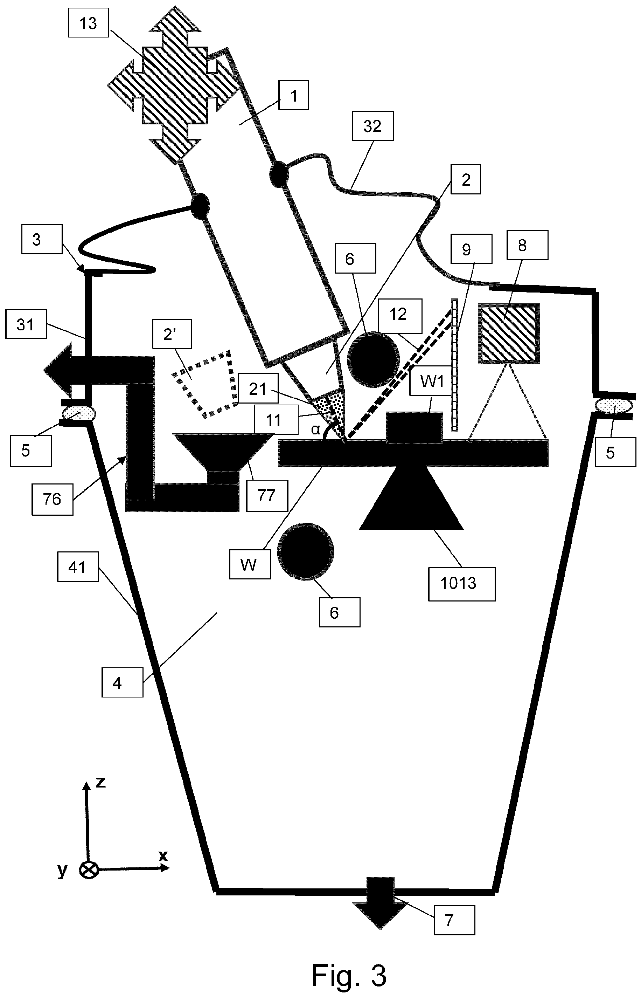

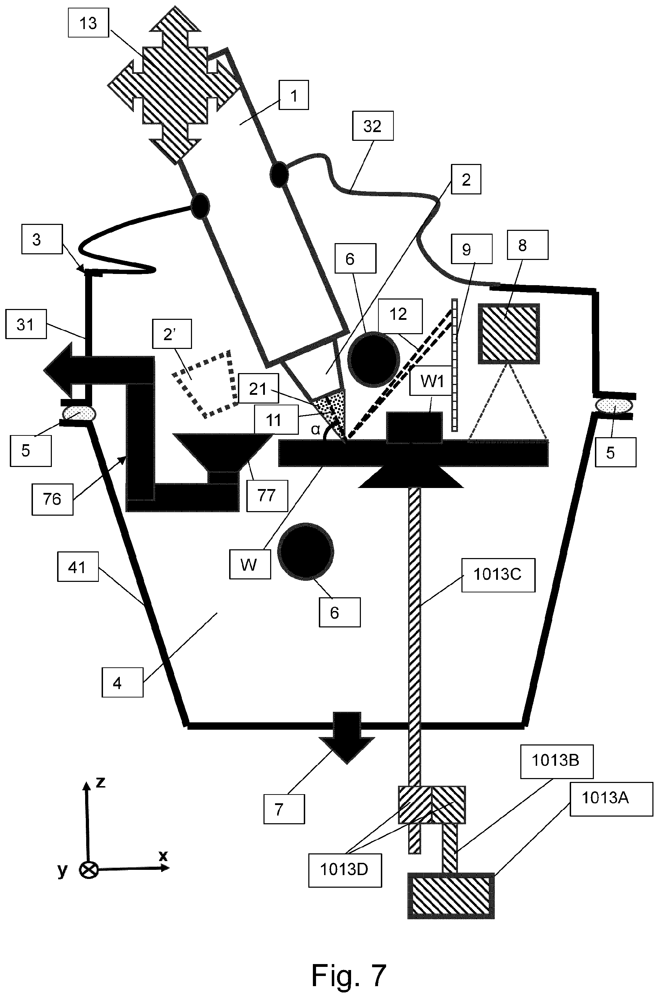

The drive means for rotating the workpiece may include some kind of motor, such as an electrical motor. These drive means may be completely housed in the container portion 41, as schematically illustrated in figure 2 and figure 3, but in other embodiments part of the drive means may be housed outside the container portion. For example, figure 7 schematically illustrates such an alternative embodiment. The general layout of the embodiment of figure 7 is similar to the one of figure 3, but here the drive means comprise a motor 1013A arranged outside the container portion 41, that is, the specific motor 1013A (including its output shaft 1013B) is permanently part of the laser cladding station C, and is arranged to rotate the workpiece via a shaft 1013C associated to the workpiece support and that exits from the container portion 41, the two shafts 1013B and 1013C interacting via a schematically illustrated gear mechanism 1013D adapted so that the motor 1013A can be operationally connected to each workpiece support arriving at the laser cladding station, so as to be able to cause the rotation of the respective workpiece during the laser cladding operation. Also other workstations may include this kind of proprietary drive means for rotation of the workpiece.

The laser cladding station C of figure 2 includes a schematically illustrated cover 3 which, when the workpiece support 1003 arrives at the laser cladding station C, co-operates with the container portion 41 of the workpiece support and with a sealing member (for example, an elastic and/or flexible and/or inflatable sealing member) to form an enclosed space 4, hermetically sealed with respect to the surrounding environment, to prevent particles of the coating material to exit from the enclosed space 4 during operation. The container portion 41 and/or the cover 3 are provided with one or more schematically illustrated air inlets 6 to allow air to enter into the enclosed space, and one or more air outlets 7, schematically illustrated at the bottom of the container portion 41. The air outlet (and optionally also the air inlets) can be connected to a subsystem for ventilation (not shown in figure 2), including some kind of ventilation equipment suitable for creating an under-pressure so as to withdraw air, as well as excess coating material (that is, coating material particles that have not adhered to the workpiece during the cladding process) out of the enclosed space 4, via the one or more air outlets 7. The subsystem for ventilation typically includes some kind of filter arrangement for filtering out excess coating material, optionally for recycling thereof. In other embodiments in which the workpiece support 1003 remains stationary at the laser cladding station, the cover and sealing member can be used to seal off the enclosed space once the workpiece has arrived at the workpiece support 1003.

Figure 3 is a schematic cross-sectional view of part of the laser cladding station C in accordance with an embodiment of the invention, including, in particular, a container portion 41 that together with the cover 3 and the sealing member 5 delimits the enclosed space 4. The cover comprises a first part 31 that is typically relatively rigid, and a second part, namely, a flexible portion 32 (for example, a flexible hood portion) which is attached to the first part 31. The laser head 1 (in the illustrated embodiment, with the ejector 2 of coating material arranged at a front end thereof) is inserted into the enclosed space 4 through this flexible portion 32, and is attached to it in an airtight manner. Thus, due to the flexibility of the flexible portion 32 of the cover 3, the laser head 1 can be displaced in relation to the first part 31 of the cover and in relation to the container portion 41, and in relation to anything arranged within the enclosed space, including a workpiece W to be coated, arranged on the corresponding drive means 1013 for rotation thereof. The upper surface of the workpiece W is arranged in the horizontal x-y-plane, and the workpiece is arranged for being rotated around a vertical axis (z-axis).

As explained, in the illustrated embodiment, at the front end of the laser head 1, the ejector 2 of coating material is arranged, typically comprising a plurality of nozzles (not shown as such) arranged so as to project the coating material 21 towards a spot where the axes of the nozzles converge, so as to form what is sometimes referred to as a "powder cone", with its tip portion at or close to the surface of the workpiece to be coated. This "powder cone" surrounds the laser beam 11 projected by the laser head 1. Thus, the laser head 1 and the ejector 2 of coating material form a unit that is jointly displaced, for example, in parallel with the x axis (that is, radially in relation to the workpiece surface) and which can also be jointly tilted, for example, in the x-z plane and/or in the y-z plane, so as to modify the angle of incidence between the laser beam (and the powder cone) and the workpiece surface to be coated.

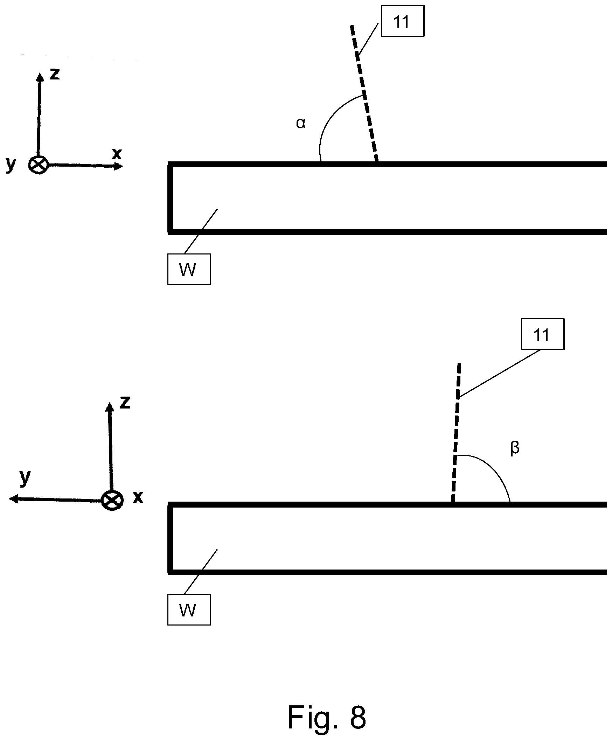

The laser head 1 is typically inclined in relation to the plane (the x-y plane) of the surface of the workpiece to be coated, so that the laser beam 11 exiting from the laser head 1 forms an angle α of less than 90 degrees with the x-y plane, as schematically illustrated in figure 3. This inclination can be advantageous in order to reduce reflection of the laser beam back into the laser head 1, and also to allow the coating to extend too close to the central elevated projection W1 (schematically illustrated in figure 3) featured by many brake disc workpieces, while minimizing the risk of interference between the workpiece W and the front portion of the laser head 1 and/or the nozzles of the ejector 2 of coating material. Part of the laser beam 12 is reflected off the surface of the workpiece, as schematically illustrated in figure 3. Due to the fact that the laser beam 11 exiting from the laser head 1 is typically focused so as to have its focal point at or close to the surface of the workpiece W, the reflected part of the laser beam typically has a diverging shape, as schematically illustrated in figure 3. As figure 3 is a side view, the perceived angle α is the angle between the projection of the laser beam on the vertical x-z plane; the beam as such may not lie in the x-z plane but could also have a component in the direction of the y-axis. In many embodiments, the projection of the laser beam 11 onto the y-z plane is at an angle β (see figure 8) with the horizontal x-y plane that is typically closer to 90 degrees than the angle α. Figure 8 schematically illustrates the orientation of the laser beam 11 in relation to the surface of the workpiece W (which extends in the x-y plane), namely, the angle α between the orthogonal projection of the laser beam onto the (vertical) x-z plane and the surface of the workpiece (in the x-y plane), and the angle β between the orthogonal projection of the laser beam onto the (vertical) y-z plane and the surface of the workpiece (in the x-y plane).

Aspects that influence the choice of orientation of the laser beam in relation to the surface to be coated -that is, the angles α and β- are the need to prevent the laser head 1 and/or the ejector 2 of coating material from entering into contact with the workpiece W (for example, as explained above), and also the need or desire to prevent reflected laser light and/or ejected coating material that does not adhere to the workpiece from arriving at the laser head and or the ejector of coating material and potentially causing damage to these components. In some embodiments, the absolute value of α (that is, "|α|") is between 75 and 89 degrees (that is, α is between 75 and 89 degrees, or α is between -75 and -89 degrees), such as between 83 and 87 degrees, whereas the absolute value of β ("|β|") may preferably be between 75 and 89.5 degrees, such as between 87 and 89.5 degrees, such as between 88 and 89 degrees. However, typically there is a desire to keep both angles as close to 90 degrees as possible, while avoiding the above-mentioned problems.

An arrangement 13 for manipulating the laser head 1, in particular, to displace it and/or to modify its orientation in space, is schematically illustrated in figure 3. This arrangement can be of any suitable type, and suitable arrangements are well known in the art and there is thus no need to further describe them herein. The arrangement 13 for manipulating the laser head is, in the illustrated embodiment, housed entirely outside the enclosed space 4, and is thus not likely to be contaminated by excess coating material originating from the ejector 2 of coating material. The arrangement 13 serves to displace the laser head in relation to the surface to be coated, and to set the orientation of the laser beam 1 in space, in particular, its orientation vs. the surface of the workpiece W to be coated, so as to set the angle of incidence between the laser beam 11 and the surface of the workpiece W.

If the kind of arrangement described above were provided in a relatively large space, the diverging reflected laser beam 12 could be projected onto part of the inner wall of the enclosure at a substantial distance from the point of reflection, so that the projected laser spot would have a rather substantial size, whereby the reflected energy would be distributed over a substantial surface area. However, in the case of a more reduced space, the reflected laser beam is projected onto part of the enclosure or on items present within the enclosed space, such as for example a measuring device (a measuring device 8 for measuring the height of the coating is schematically illustrated in figure 3), at a distance where the power per surface area of the cross section of the beam is relatively high (for laser cladding, laser beams with power levels in the multi-kW range are typically used; for example, in some embodiments of the invention, the laser beam power will be between 10 kW and 20 kW). Thus, in this context, the reflected laser light 12 may cause damage or wear to the interior of the enclosure, such as to the walls of the enclosure, for example, the walls 41 or the cover 3 of the illustrated embodiment, and/or to components present within the enclosure. Also, the reflected laser light may contribute to undesired heating of the laser cladding station C or of part(s) thereof.

In what regards the coating material, it is well known that in this kind of processes, part of the coating material is not adhered to the substrate. In the present case, excess coating material, in powder form (that is, made up of relatively small particles), is removed from the enclosed space 4 of the laser cladding station C. Removal takes place, at least in part, by the creation of a flow of gas (air) through the enclosed space or part thereof. In figure 3, air inlets 6 (on the wall behind the workpiece and the laser head, as viewed in the figure) and an air outlet 7 (at the bottom of the enclosure of the enclosed space 4) are schematically illustrated. A subsystem for ventilation (not shown in figure 3) is provided that basically suctions air out of the enclosure and, together with the air, excess coating material that is filtered out downstream from the air outlet 7. The bottom of the enclosed space is here shown horizontal, but it may in practice be shaped and oriented so as to facilitate the flow of gas and excess coating material towards the air outlet 7.

Now, and whereas for efficient use of coating material a substantial part of the coating material supplied from the ejector 2 should remained adhered to the workpiece to form the layer, that is, whereas the amount of excess coating material should be minimized, surprisingly the excess coating material has been found to also provide benefits. In particular, the excess coating material has been found to interact with the reflected laser light and to absorb part of the energy associated therewith, and it has been found that this can be enhanced by promoting movement of the excess coating material towards the reflected laser light. This promotion can be achieved by, for example, arranging the air inlet(s) 6 and outlet(s) 7 so as to create air flow conditions within the enclosed space 4, in particular in the area above the surface of the workpiece W, that promotes movement of the excess coating material towards the reflected laser light 12, so that the reflected laser light energy can be partly absorbed by the particles of the excess coating material. As these particles are subsequently evacuated through the air outlet(s) 7, this serves not only to reduce (the risk of) damage or wear of, for example, the walls enclosing the enclosed space or components within it, but also serves to reduce heating of the enclosed space, as part of the heat energy originating from the laser light is evacuated from the enclosed space in the form of heated particles of the excess coating material. Obviously, care should be taken when establishing the air flow conditions to ensure that they do not impede adequate performance of the laser cladding process itself, such as by disturbing the flow of coating material from the ejector 2 of coating material and towards the surface of the workpiece.

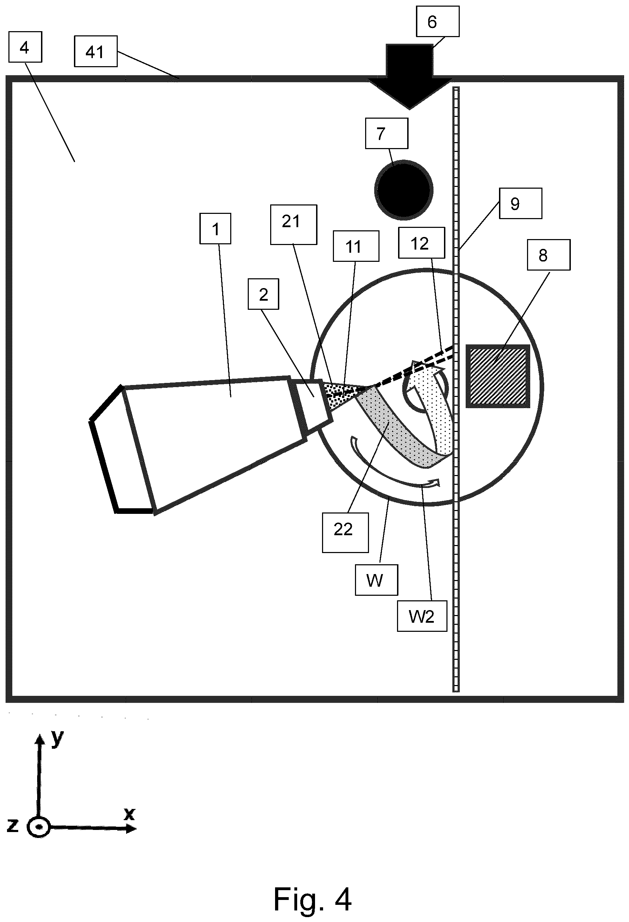

Figure 4 schematically illustrates how the laser head 1 and the ejector 2 of coating material jointly apply a "powder cone" of coating material 21 and the laser beam 11 towards the surface of the brake disc workpiece W, which is rotating in the direction indicated by the arrow W2. The reflected laser beam 12 is likewise schematically illustrated.

Part of the coating material 21 (powder) is deposited onto the surface of the workpiece, and the laser head 1 and ejector 2 of coating material travel in parallel with the x-axis so as to progressively build up the coating layer on the top surface of the workpiece W, as known in the art. As explained, part of the coating material does not remain adhered to the surface of the workpiece but moves away from the area of the powder cone 21. The excess coating material 22 is schematically illustrated by an arrow, which shows how part of the excess coating material 22 may first follow the movement of the surface of the workpiece and then turn and partially move in the y-axis direction, traversing the area where the reflected laser beam 12 is present. Here, particles of the excess coating material may absorb radiation and become heated by the reflected laser beam 12, thereby reducing the energy of the reflected laser beam 12 that finally ends up projected onto other components within the enclosed space 4 of the laser cladding station, or on the walls or cover thereof. Thus, the risk of damage to housing or components is reduced, and part of the laser energy is transferred to excess coating material that is subsequently evacuated via the air outlet 7 at the bottom of the enclosure, rather than ending up heating part of the cladding station. Obviously, the illustration in figure 4 is merely schematic: in practice, the excess coating material will be present all throughout the enclosed space 4, but the arrangement promotes movement of the excess coating material towards and through the portion of the enclosed space traversed by the reflected laser beam 12. This is preferably achieved by arranging the air inlet(s) 6 and the air outlet(s) 7 so as to create air flow conditions within the enclosed space that promote movement of excess coating material particles through the portion of the enclosed space traversed by the reflected laser beam 12, prior to evacuation of these excess coating material particles via the air outlet(s) 7. Obviously, depending on the specific design of the cladding station and, in particular, of the enclosed space and of the components present within the enclosed space, and depending on the arrangement and operation of laser head 1 and ejector 2 of coating material, the appropriate means for creating these air flow conditions will vary. In figure 4, and just as an example, it is shown how both the air inlet(s) 6 (one of which is shown in the figure) and the air outlet 7 are arranged spaced from the center of the enclosed space, according to the y-axis, thereby generating a vertical air flow path on one side of the workpiece W, that under appropriate conditions will tend to pull the excess coating material back over the workpiece and through the part of the enclosed space that is traversed by the reflected laser beam 12, as schematically illustrated by the arrow 22 in figure 4.

In figures 3 and 4, a shield 9, such as a shield plate, is schematically illustrated. The shield 9 is arranged so as to receive the reflected laser beam 12 radiation that is not absorbed by the excess coating material 22. Thus, this non-absorbed laser energy may cause thermal wear and damage to the shield plate which, however, may be more robust in this regard, and/or cheaper and/or easier to replace, than the walls enclosing the enclosed space. Also, the shield plate may serve to reduce the risk of components present in the enclosed space, such as the schematically illustrated measuring device 8, becoming damaged by the reflected laser beam 12.

In figure 3 an additional outlet arrangement 76 is schematically illustrated, including a schematically illustrated coating material receiver 77 arranged radially outside of the workpiece W. The laser head 1 with the ejector 2 of coating material is horizontally displaceable (in parallel with the x axis) so that it can be displaced from a first position above the workpiece (in which it is illustrated in figure 3, and in which the laser beam and the coating material can be directed towards the surface of the workpiece W to be coated), to a second position (schematically illustrated by the ejector 2' of coating material, illustrated with discontinuous lines, in figure 3), laterally offset from the workpiece and above the coating material receiver 77, so that coating material ejected from the ejector 2 of coating material will enter the coating material receiver 77 and be evacuated from the enclosed space 4 via the additional outlet arrangement 76, in any suitable way. Thereby, the ejector 2 of coating material can continue to eject coating material also during the time when a change of workpiece W is taking place in the laser cladding station C, that is, during the time between termination of the process of coating one workpiece and the initiation of the process of coating a subsequent workpiece, in particular, during the time when a change of workpiece in the cladding station is taking place, for example, by rotation of the rotary platform 1000, while minimizing the risk of coating material exiting the laser cladding station and contaminating the environment. Thereby, ejection of coating material by the ejector 2 of coating material can be carried out continuously during operation of the machine, without any need to interrupt the ejection during the time between subsequent coating operations, in particular, during the time when workpiece changes are taking place. The rotary arrangement allows for rapid exchange of workpieces in the work stations. If the ejection of coating material were to be interrupted while a change of workpiece is taking place, time would be lost due to the need to establish stable and adequate coating material flow conditions out of the ejector 2 of coating material prior to initiation of the coating of the new workpiece arriving at the laser cladding station. By operating the ejector 2 of coating material continuously, that is, also during the time between termination of the coating of one workpiece and initiation of the coating of the next workpiece, in particular, during the time when the coated workpiece is removed from the laser cladding station and the next workpiece enters into the laser cladding station, no time is lost for re-establishing the adequate flow conditions of coating material (powder) out of the ejector 2 of coating material, and the cycle time at the cladding station can be minimized. This is important, as the cycle time at the cladding station typically equals the cycle time of the machine (the coating process at the laser cladding station typically take more time than the processes carried out in the other work stations), whereby minimizing the cycle time at the cladding station serves to maximize productivity of the machine as a whole.

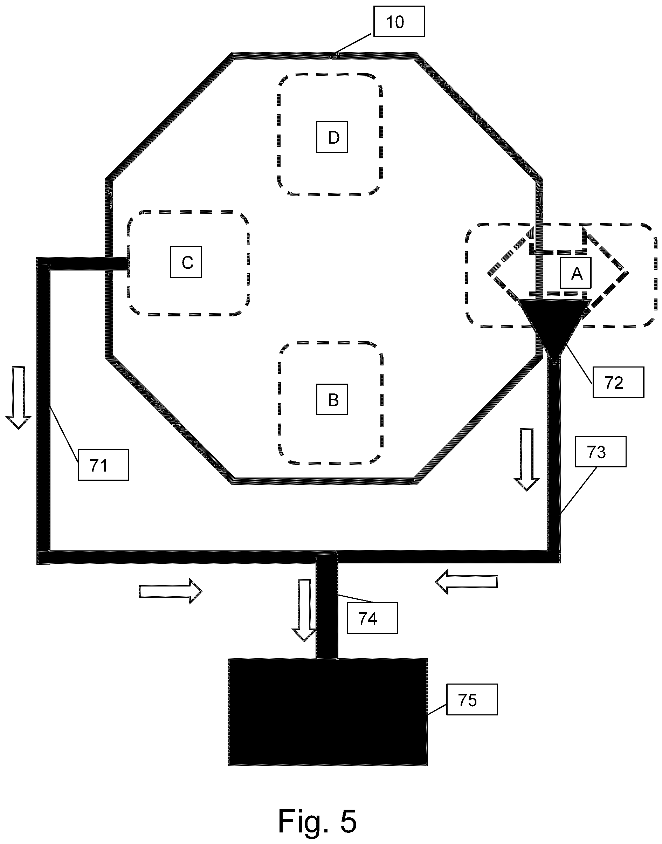

Figure 5 schematically illustrates how the work stations A-D of a machine, in accordance with an embodiment of the invention, are enclosed by a machine enclosure 10, designed to reduce the risk of excess coating material (particles) exiting the machine and contaminating the surrounding installations, maybe causing health risks. The only part of the machine that is accessible during normal production operation is, in this embodiment, the workstation A for loading and unloading. Here, a suction arrangement 72 can be provided, arranged for suctioning air and excess coating material particles present therein, at the access opening to the workstation for loading and unloading. This suction arrangement can communicate with a subsystem for ventilation 75 via a ventilation conduit 73. On the other hand, in the illustrated embodiment, the air outlet 7 communicates with the same subsystem for ventilation 75 via another conduit 71. The two conduits 71 and 73 merge into a joint conduit 74 before reaching the subsystem for ventilation 75, so that the air with excess coating particles that leaves the laser cladding station C, and which typically is at a very high temperature (due to the conditions within the enclosed space of the laser cladding station), becomes mixed with the air suctioned at the work station A for loading and unloading, which typically is at a much lower temperature, thereby preventing air and excess coating material particles exiting from the laser cladding station C from directly reaching the subsystem for ventilation, which typically is relatively sensitive to high temperatures. That is, the mixing of the high temperature air and particle stream coming from the cladding station C with a lower temperature air stream coming from the area of the work station A for loading and unloading can help reduce the risk of overheating of the substation for ventilation 75 and/or to minimize the need of operating expensive cooling equipment.

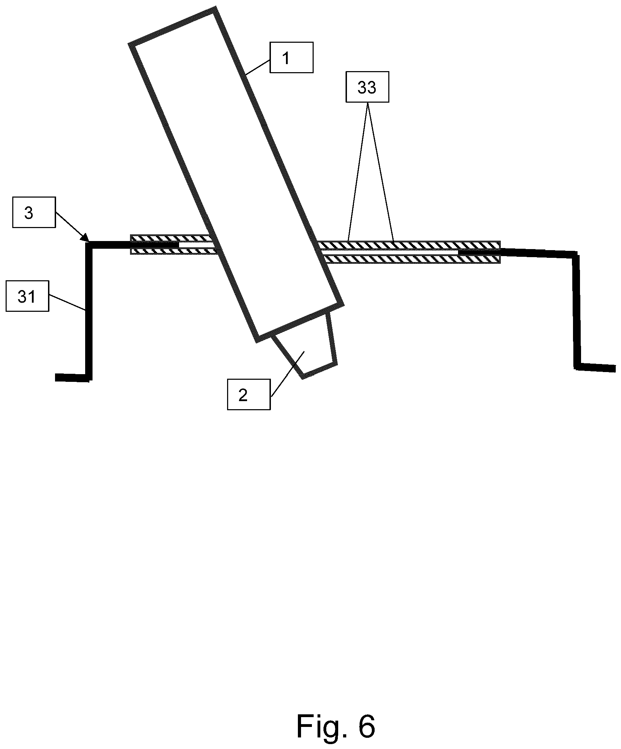

Figure 6 illustrates an alternative to the flexible hood approach shown in figure 3: in this alternative embodiment, the laser head 1 is arranged in a second portion 33 of the cover 3, the second portion being displaceable in relation to a first portion of the cover 31 that surrounds the second portion 33, so as to allow the laser head to be displaced in relation to the brake disc workpiece.

### List of reference numbers:

- 1000: rotary platform
- 1001, 1002, 1003, 1004: workpiece supports
- 1005: center column
- 1011, 1013: drive means for rotation of workpieces in the workpiece supports
- A, B, C, D: work stations
- 1: laser head
- 11: laser beam exiting from the laser head
- 12: reflected laser beam
- 13: arrangement for manipulating the laser head
- 2: ejector of coating material
- 2': the ejector of coating material in a second position
- 21: coating material
- 22: excess coating material
- 3: cover
- 31: first part of the cover
- 32: flexible portion of the cover
- 33: second part of the cover
- 4: enclosed space
- 41: container portion
- 5: sealing member
- 6: air inlet
- 7: air outlet
- 71: evacuation conduit from the air outlet
- 72: suction arrangement
- 73: ventilation conduit from the station for loading/unloading
- 74: joint conduit towards the subsystem for ventilation
- 75: subsystem for ventilation
- 76: additional outlet arrangement
- 77: coating material receiver
- 8: measuring device
- 9: shield
- 10: machine enclosure
- W: brake disc workpiece
- W1: central elevated portion of the workpiece
- W2: direction of rotation of workpiece
- Z1: platform axis
- Z2: workpiece axis

In this text, the term "coating material" typically refers to material in particulate form, such as powder, useful for creating a layer using a laser cladding process.

In this text, references to "air" are not limited to ambient air but may encompass any gaseous mixture, for example, air mixed with a carrier gas, such as argon, of the coating material.

All ranges referred to throughout this text (for example, in terms of "in the range of A to B" or "between A and B") include the recited endpoints of the range, unless the contrary is explicitly indicated.

In this text, references to x, y and z axis relate to such axes that are perpendicular to each other.

In this text, the term "comprises" and its derivations (such as "comprising", etc.) should not be understood in an excluding sense, that is, these terms should not be interpreted as excluding the possibility that what is described and defined may include further elements, steps, etc.

The invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A machine for coating brake disc workpieces (W), the machine comprising a laser cladding station (C) for applying a coating onto a brake disc workpiece (W) supported on a workpiece support (1001, 1002, 1003, 1004), the laser cladding station (C) comprising:
an ejector (2) of coating material for ejecting coating material (21) towards a surface of the workpiece (W);
a laser head (1) for projecting a laser beam (11) for heating coating material (21) so that it adheres to a surface of the workpiece (W) to form part of a coating layer on the surface;
an enclosure for defining an enclosed space (4) for housing the workpiece (W); and
drive means (1013) for rotating the workpiece within the enclosed space (4);
wherein the laser head (1) and the ejector (2) of coating material are at last partially arranged within the enclosed space (4), the laser head (1) and the ejector (2) of coating material being radially displaceable in relation to the workpiece (W) so as to allow for deposition of a coating on a surface area of the workpiece by operating the laser head (1) and the ejector (2) and displacing them radially in relation to the workpiece (W), while rotating the workpiece (W), so as to progressively build up a coating layer on the surface area of the workpiece (W);
**characterized in that** the machine further comprises a subsystem (75) for ventilation arranged for withdrawing air and excess coating material from the enclosed space (4) via at least one air outlet (7) for letting air and excess coating material out of the enclosed space (4).

2. The machine according to claim 1, wherein the laser cladding station (C) is arranged so that the laser head (1) projects a laser beam (11) onto the surface of the workpiece (W) whereby the laser beam is reflected off the surface of the workpiece, the laser cladding station (C) being arranged to promote movement of excess coating material (22) through the reflected laser beam (12), to absorb part of the reflected laser beam (12).

3. The machine according to claim 2, comprising at least one air inlet (6) for letting air into said enclosed space, wherein the at least one air inlet (6) and the at least one air outlet (7) are arranged so as to promote movement of excess coating material (22) through the reflected laser beam (12).

4. The machine according to any one of the preceding claims, wherein a shield (9) is arranged within the enclosed space (4) so as to receive laser light (12) reflected off the workpiece (W).

5. The machine according to any one of the preceding claims, comprising:
- a plurality of work stations (A, B, C, D), each workstation being arranged for carrying out at least one operation in relation to a brake disc workpiece (W);
- a rotary platform (1000) provided with a plurality of workpiece supports (1001, 1002, 1003, 1004), the workpiece supports (1001, 1002, 1003, 1004) being distributed around the rotary platform (1000) so that, by rotation of the rotary platform (1000) around a platform axis (Z1), the workpiece supports (1001, 1002, 1003, 1004) can be shifted from one of the work stations to another one of the work stations, to allow workpieces (W) arranged in the workpiece supports (1001, 1002, 1003, 1004) to be sequentially operated upon in the work stations (A, B, C, D);
- each workpiece support (1001, 1002, 1003, 1004) being configured for supporting a workpiece (W) so that the workpiece (W) can be rotated around a respective workpiece axis (Z2) in the workpiece support (1001, 1002, 1003, 1004);
wherein
- one of the work stations is a loading station (A) for loading a workpiece (W) onto a respective workpiece support (1001, 1002, 1003, 1004);
- another one of the work stations is the laser cladding station (C);
wherein the laser cladding station (C) comprises a cover (3) arranged to interact with the corresponding workpiece support (1001, 1002, 1003, 1004) to form the enclosed space (4) housing the workpiece (W), at least part of the ejector (2) of coating material, and at least part of the laser head (1).

6. The machine according to claim 5, further comprising, in the laser cladding station (C), at least one sealing member (5) for creating a seal between the cover (3) and the workpiece support (1003) and/or the rotary platform (1000) at the location of the workpiece support, so as to seal the enclosed space (4) so as to prevent exit of coating material from the enclosed space (4).

7. The machine according to claim 6, wherein the at least one sealing member (5) comprises at least one inflatable member.

8. The machine according to claim 7, wherein the machine is arranged for inflating the inflatable member prior to initiating a laser cladding operation in the laser cladding station (C), and to deflate the inflatable member after conclusion of the laser cladding operation.

9. The machine according to any one of claims 5-8, wherein the drive means (1013) comprise a drive motor (1013A) arranged outside the enclosed space (4) and arranged to interact with the workpiece support (1001, 1002, 1003, 1004) arriving at the laser cladding station (C) upon rotation of the rotary platform (1000), so as to cause rotation of the respective workpiece (W).

10. The machine according to any one of claims 1-4, comprising:
- a plurality of work stations (A, B, C, D), each workstation being arranged for carrying out at least one operation in relation to a brake disc workpiece (W), each work station comprising a workpiece support (1001, 1002, 1003, 1004) for supporting a workpiece, the machine being arranged for shifting workpieces from one of the work stations to another one of the work stations, to allow workpieces (W) to be sequentially operated upon in the work stations (A, B, C, D);
wherein
- one of the work stations is a loading station (A) for loading a workpiece (W) into the machine;
- another one of the work stations is the laser cladding station (C);
wherein the laser cladding station (C) comprises a cover (3) arranged to interact with a complementary structure (41) to form the enclosed space (4) housing the workpiece (W), at least part of the ejector (2) of coating material, and at least part of the laser head (1).

11. The machine according to claim 10, further comprising, in the laser cladding station (C), at least one sealing member (5) for creating a seal between the cover (3) and the complementary structure (41), so as to seal the enclosed space (4) so as to prevent exit of coating material from the enclosed space (4).

12. The machine according to claim 11, wherein the at least one sealing member (5) comprises at least one inflatable member.

13. The machine according to claim 12, wherein the machine is arranged for inflating the inflatable member prior to initiating a laser cladding operation in the laser cladding station (C), and to deflate the inflatable member after conclusion of the laser cladding operation.

14. The machine according to any one of claims 10-13, wherein the drive means (1013) comprise a drive motor (1013A) arranged outside the enclosed space (4) and arranged to interact with the workpiece support (1003), so as to cause rotation of the respective workpiece (W).

15. The machine according to any one of the preceding claims, wherein the laser cladding station (C) is provided with means (6, 7) for creating an air flow through the enclosed space, for removal of excess coating material towards the subsystem (75) for ventilation.

16. The machine according to any one of the preceding claims, wherein the laser head (1) and/or the ejector (2) of coating material are arranged to be controllably displaceable in a radial direction with regard to the workpiece axis (Z2) during laser cladding, so that a laser beam produced by the laser head (1) and/or a stream of coating material ejected by the ejector (2) of coating material, respectively, can be controllably displaced in relation to the surface of the workpiece to be coated during a laser cladding operation at the laser cladding station (C).

17. The machine according to any one of the preceding claims, wherein the laser head (1) is arranged in a flexible portion (32) of the cover (3), thereby allowing the laser head (1) to be displaced in relation to the workpiece (W) during laser cladding.

18. The machine according to any one of the preceding claims, wherein the laser head (1) is arranged in a second portion (33) of the cover that is displaceable in relation to a first portion (31) of the cover, thereby allowing the laser head (1) to be displaced in relation to the workpiece (W) during laser cladding.

19. The machine according to any one of the preceding claims, wherein the enclosed space (4) has a volume of less than 0.5 m³., preferably less than 0.4 m³, even more preferably less than 0.3 m³.

20. The machine according to any one of the preceding claims, wherein the air outlet (7) is connected to the subsystem for ventilation (75) via a first conduit (71), and wherein the subsystem for ventilation (75) is connected to another station of the machine via a second conduit (73), and wherein the first conduit (71) and the second conduit (73) are interconnected upstream of the subsystem for ventilation (75) in order to mix an air stream carrying excess coating material arriving via the first conduit (71), and an air stream arriving via the second conduit (73), prior to these air streams arriving at the subsystem for ventilation (75).

21. The machine according to any one of the preceding claims, wherein the laser cladding station (C) comprises an additional outlet arrangement (76) including a coating material receiver (77), the ejector (2) of coating material being displaceable from a first position above the workpiece (W) for ejecting coating material towards the workpiece (W), and a second position proximate to the coating material receiver (77) for ejecting coating material into the coating material receiver (77), for evacuation of coating material via the additional outlet arrangement (76).

22. A method of operating a machine according to any one of the preceding claims, comprising:
- loading a brake disc workpiece (W) into the machine;
- positioning the brake disc workpiece (W) in the enclosed space (4);
- with the brake disc workpiece (W) in the enclosed space (4), carrying out a laser cladding operation on the workpiece using the laser head (1) and the ejector (2) of coating material, so as to build up a coating layer on the workpiece;
- evacuating excess coating material (22) from the enclosed space (4);
- unloading the brake disc workpiece (W) from the machine.

23. The method according to claim 22, comprising the step of promoting movement of excess coating material (22) towards a reflected laser beam (12) within the enclosed space (4), in order to at least partially absorb reflected laser beam energy with the excess coating material (22), prior to evacuating the excess coating material (22) from the enclosed space (4).

24. The method according to claim 23, wherein promoting the movement of excess coating material (22) towards the reflected laser beam (12) comprises generating air flow within the enclosed space so as to favor movement of excess coating material (22) towards the reflected laser beam (12).

25. The method according to any one of claims 22-24, comprising the steps of:
- introducing a brake disc workpiece (W) into the laser cladding station (C);
- after positioning the brake disc workpiece (W) in the enclosed space (4), moving the ejector (2) of coating material to a first position for initiating the laser cladding operation on the workpiece (W) to produce a coated workpiece (W);
- after finishing the laser cladding operation on the workpiece (W), moving the ejector (2) of coating material to a second position, for ejecting coating material (2) into a coating material receiver (77), for evacuation of coating material via the additional outlet arrangement (76);
whereby ejection of coating material via the ejector (2) of coating material is not interrupted during removal of the coated brake disc workpiece (W) from the laser cladding station (C) and introduction of a new workpiece into the laser cladding station (C).

26. The method according to any one of claims 22-25, wherein carrying out the laser cladding operation comprises directing a laser beam (11) towards a workpiece (W) surface portion extending in an x-y plane, wherein during the laser cladding operation the laser beam is displaced along the surface of the workpiece along the x-axis, wherein the laser beam is oriented so that an orthogonal projection of the laser beam (11) onto an x-z plane forms an angle α with the x-y plane, and so that an orthogonal projection of the laser beam onto an y-z plane forms an angle β with the x-y plane, wherein 75°≤|α|≤89.5°, and wherein 75°≤|β|≤89.5°.

27. Use of excess coating material in a machine according to any one of claims 1-21 or in a method according to any one of claims 22-26, for absorbing reflected laser beam energy.
